# EUROPÄISCHE PATENTSCHRIFT

(11) **EP 0 892 177 B1**
(45) Veröffentlichungstag und Bekanntmachung des Hinweises auf die Patenterteilung: **27.08.2003**
(21) Anmeldenummer: 98107772.0
(22) Anmeldetag: 29.04.1998
(51) Int. Cl.: F16B 5/00, B61D 17/04, B62D 27/06

(54) **Verbindung der Stirnseiten von zwei hohlen Vierkantprofilen**
Connection of the ends of two hollow profiles with a square cross-section profile
Connexion des extrémités de deux profilés creux de section carrée

(30) Priorität: 18.07.1997 DE 19730856
(43) Veröffentlichungstag der Anmeldung: 20.01.1999
(73) Patentinhaber: SIEMENS AKTIENGESELLSCHAFT, 80333 München (DE)
(72) Erfinder: Altenburg, Klaus, Dr.-Ing., 52146 Würselen (DE); Zimmermann, Michael, Dipl.-Ing., 52066 Aachen (DE)

(56) Entgegenhaltungen:
- EP-A- 0 179 198
- EP-A- 0 770 784
- WO-A-86/00118
- FR-A- 2 159 227
- GB-A- 797 450
- US-A- 2 962 133

## Beschreibung

Die Erfindung betrifft eine feste Verbindung der Stirnseiten von zwei hohlen Vierkantprofilen gleicher Querschnittsform, gleicher Abmessungen und gleicher Lage der Biegeachsen, wobei an jeder zu verbindenden Stirnseite ein formsteifes Endstück vorgesehen ist, das zum gegenüberliegenden Endstück jeweils kongruente Flächenabschnitte, Ausnehmungen und Vorsprünge aufweist (siehe z.B. EP-A-0 179 198).

Eine Verbindung dieser Art ist all gemein bekannt und wird beispielsweise im Behälter- oder Waggonbau benötigt. Hier kommt es häufig vor, dass hohle Vierkantprofile an ihren Stirnseiten fest und dauerhaft miteinander verbunden werden müssen. Im vorliegenden Fall wird davon ausgegangen, dass ein Verschweissen der beiden Stirnseiten der miteinander zu verbindenden hohlen Vierkantprofile nicht in Betracht kommt.

Daraus ergibt sich die Aufgabe für die Erfindung, eine feste und dauerhafte Verbindung zu schaffen, die allenfalls bei Reparaturen gelöst werden muss. Die Verbindung muss platzsparend und dazu geeignet sein, große axiale Zugkräfte sicher zu übertragen. Von noch größerer Bedeutung aber ist, dass die Verbindung auch hohe Biegemomente übertragen kann. Schließlich soll die Verbindung einfach in ihrem Aufbau und kostengünstig realisierbar sein. Aus letzteren Gründen soll sie weitgehend aus Normteilen erstellt werden können.

Erfindungsgemäß wird diese Aufgabe durch eine Verbindung der eingangs genannten Art gelöst, bei welcher, parallel zu einer der beiden Biegeachsen des Vierkantprofils und jeweils in einem Abstand dazu die Ausnehmungen beider Endstücke zwei durchgehende zylindrische Bohrungen bilden, deren beide äußeren Enden jeweils von kegelstumpfförmigen, sich zum Endstück hin verbreiternden und über einen Halbkreis erstreckenden Vorsprüngen der Endstücke umgeben werden und in denen jeweils ein Zuganker gelagert ist, dessen äußere Enden sich über Formscheiben auf den äußeren Flanken der Vorsprünge abstützen, während die zwischen den Bohrungen und den dazu parallelen äußeren Rändern gelegenen Flächenabschnitte der Endstücke unter der Spannung der Zuganker eng aufeinander gepresst werden.

Insbesondere ist vorgesehen, dass der Abstand der beiden zylindrischen Bohrungen zum nächstgelegenen dazu parallelen äußeren Rand des Endstücks so gering wie möglich gehalten wird. Hierdurch ergibt sich ein möglichst großer Abstand der Längsachsen der Zuganker zur Biegelinie des Vierkantprofils, wodurch große Biegemomente übertragen werden können, ohne dass die Verbindung auseinandergeht.

Nach einer weiteren, vorteilhaften Ausgestaltung ist der Durchmesser jeder der beiden zylindrischen Bohrungen geringfügig größer als der Durchmesser des jeweiligen Zugankers. Auf diese Weise wird der Zuganker in der jeweiligen zylindrischen Bohrung reibungsfrei gelagert, so daß die im Zuganker herrschenden Spannkräfte verlustfrei auf die dafür vorgesehenen tragenden Flächen übertragen werden können. Als Zuganker sind beispielsweise Schraubenbolzen mit Mutter oder Niete vorgesehen. Weiterhin ist vorgesehen, daß auf den zwischen den Bohrungen gelegenen Flächenabschnitten der Endstücke unter der Vorspannung der Zuganker ein geringes Spiel bleibt. Auf diese Weise werden nahezu ausschließlich jene Flächenabschnitte unter die Vorspannung der Zuganker gestellt, die sich zwischen den Bohrungen und den benachbarten Rändern der Endstücke befinden. Die Folge davon ist, dass die Verbindung auch unter hohen Biegemomenten noch atmen kann.

Zusätzlich ist vorgesehen, dass die zylindrischen Bohrungen zur Aufnahme der Zuganker zusätzlich noch von einer weiteren Bohrung durchschnitten werden. Die weitere Bohrung erstreckt sich senkrecht zur ersten Biegeachse und fällt damit in die Richtung der zweiten Biegeachse des Vierkantprofils. Die zusätzliche Bohrung dient im wesentlichen zur Belüftung der Verbindung und verhindert zugleich, dass sich in den zylindrischen Bohrungen Schwitzwasser ansammeln kann.

Das Endstück kann beispielsweise als Schmiedestück ausgeführt sein. Noch preisgünstiger und genauer aber ist ein Ausführung des Endstücks als Feingussteil. Bei Ausbildung als Feingussteil werden die geforderten Genauigkeiten mit ausreichender Sicherheit erreicht. Auch ist es mit den modernen Techniken möglich, zwischen dem Endstück und dem Vierkantprofil eine einwandfreie, hochbelastbare Kleb-, Löt- oder Schweißverbindung herzustellen.

Das hohle Vierkantprofil kann sowohl aus Stahl, Aluminium, Titan aber auch aus Kunststoff hergestellt sein. Für eine Ausführung in Kunststoff gelten die vorstehenden Ausführungen analog, in diesem Falle würde beispielsweise das Endstück ebenfalls aus einem Kunststoff hergestellt sein, der sich mit dem hohlen Vierkantprofil mühelos verbinden lässt.

Nachfolgend wird die Erfindung an einem Ausführungsbeispiel näher beschrieben. Es zeigen jeweils maßstäblich die
- Fig. 1 eine Seitenansicht,
- Fig. 2 eine Draufsicht,
- Fig. 3 ein Schnitt entlang der Linie A - A der Fig. 2 und
- Fig. 4 einen Schnitt entlang der Linie B - B der Fig. 1.
- Die Fig. 5 zeigt eine perspektivische Ansicht eine Endstücks in etwas vergrößertem Maßstab.

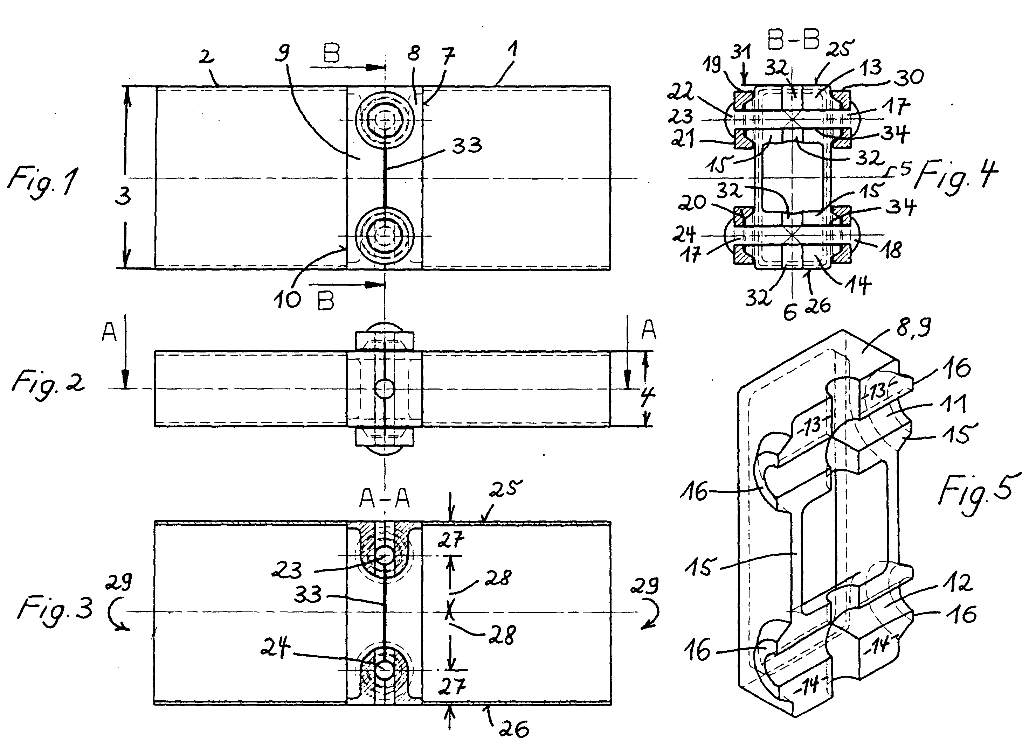

In der Fig.1 sind zwei hohle Vierkantprofile 1 und 2 gezeigt. Die beiden Vierkantprofile 1 und 2 haben dieselbe Höhe 3 und dieselbe Breite 4. Bei identischer Raumlage haben beide die horizontale Biegeachse 5 und die vertikale Biegeachse 6 gemeinsam. An der Stirnseite 7 des Vierkantprofils 1 ist ein erstes formsteifes Endstück 8 befestigt, dem ein zweites formsteifes Endstück 9 gegenüberliegt, welches seinerseits mit der Stirnseite 10 des Vierkantprofils 2 fest verbunden ist. Die beiden Endstücke 8 und 9 sind in ihren Abmessungen und in ihrer Konfiguration völlig identisch.

Wie aus der Fig. 5 erkennbar, haben die beiden Endstücke 8 und 9 zueinander kongruente Ausnehmungen 11 und 12, äußere Flächenstücke 13 und14, innere Flächenstücke 15 und kegelstumpfförmige Vorsprünge 16. Die vier kegelstumpfförmigen Vorsprünge 16 erstrecken sich jeweils in einem Halbkreis und begrenzen die Ausnehmungen 11 und 12 an je einem Ende. Im zusammengebauten Zustand, wie er in der Fig. 4 dargestellt ist, bilden die beiden Ausnehmungen 11 und 12 jeweils durchgehende zylindrische Bohrungen 34, in welchen jeweils ein Zuganker 17 und 18 gelagert ist. Im vorliegenden Beispiel sind die beiden Zuganker 17 und 18, wie erkennbar, als Niet ausgebildet. Die Zuganker 17 und 18 stützen sich mit ihren äußeren Enden auf Formscheiben 19 ab. Die Formscheiben 19 haben auf ihrer inneren jeweils den Vorsprüngen 16 der Endstücke 8 und 9 zugewandten Seiten kegelstumpfförmige Ausnehmungen 20. Damit liegen sie auf den äußeren Flanken der kegelstumpfförmigen Vorsprünge 16 bei der Endstücke 8 und 9 zugleich auf. Auf ihren äußeren Seiten 21 sind die Formscheiben 19 plan, so dass dort die Nietköpfe 22 der Zuganker 17 und 18 satt zur Auflage kommen.

Wie aus der Fig. 3 erkennbar, haben die beiden Längsachsen 23 und 24 der Zuganker 17 bzw. 18 jeweils einen geringen Abstand 27 zu den benachbarten äußeren Rändern 25 und 26 der Vierkantprofile 1 und 2. Daraus resultiert der jeweils größtmögliche Abstand 28 von der Biegeachse 5, so dass große Biegemomente 29 übertragen werden können. Tatsächlich ist der Abstand 27 von den Rändern 25 bzw. 26 so gewählt, dass zwischen dem äußeren Rand 30 der Formscheiben 19 und dem äußeren Rand 25 bzw. 26 der Enstücke 8 bzw. 9 noch ein geringer Abstand 31 übrig bleibt, der zwischen 0,5 und 5mm beträgt. Somit ist der geringe Abstand 31 ausreichend groß, damit auch bei beispielsweise beengtem Platzverhältnissen die Formscheiben 19 ohne Schwierigkeiten an der Verbindung angebracht werden können.

In Richtung der zweiten Biegeachse 6 sind in den Endstücken 8 und 9 weitere Ausnehmungen vorgesehen, die bei zusammengefügten Endstücken 8 und 9 Durchgangsbohrungen 32 bilden. Diese Durchgangsbohrungen 32 sind dazu vorgesehen, die Verbindung zu entlüften und das Ansammeln von Kondenswasser beispielsweise innerhalb der Bohrungen 34 zu verhindern.

Beim Schließen der Verbindung werden die beiden äußeren Flächenabschnitte 13 und 14 des Endstücks 8 fest auf die jeweils dazu kongruenten Flächenabschnitte 13 und 14 des Endstücks 9 gepresst. Es handelt sich somit um tragende Flächenabschnitte. Dem gegenüber befindet sich zwischen den zueinander kongruenten inneren Flächenabschnitten 15 ein geringer Luftspalt 33, wie er in den Fig. 1 und 3 erkennbar wird. Diese Ausgestaltung mit den tragenden äußeren Flächenabschnitten 13,14 und den nichttragenden inneren Flächenabschnitten 15 ist besonders dazu geeignet, große Biegemomente 29 über die Verbindung zu übertragen, ohne dass die jeweils der gestreckten Faser zugewandten Flächenabschnitte auseinanderklaffen, wenn die Verbindung mit dem Biegemoment belastet wird. Im vorliegenden Falle sind als Zuganker 17 und 18 Niete vorgesehen. An deren Stelle können aber auch Schraubenbolzen und Muttern verwendet werden ( nicht gezeigt ). Analog zu der hier gezeigten Verbindung, wo sich die Zuganker 17 und 18 parallel zur Biegeachse 5 erstrecken, kann auch eine Verbindung realisiert werden, wo sich die Zuganker parallel zu der Biegeachse 6 erstrecken. Die vorliegende Verbindung kommt vorwiegend zum Einsatz beim Aufbau von Wagenkästen für Eisenbahnfahrzeuge. Darüberhinaus ist sie ebensogut einsetzbar beim Aufbau von Behältern beliebiger Art und Konfiguration.

### Ziffernverzeichnis

- 1: hohles Vierkantprofil
- 2: hohles Vierkantprofil
- 3: Höhe
- 4: Breite
- 5: horizontale Biegeachse
- 6: vertikale Biegeachse
- 7: Stirnseite
- 8: 1. Endstück
- 9: 2. Endstück
- 10: Stirnseite
- 11: Ausnehmung
- 12: Ausnehmung
- 13: äußerer Flächenabschnitt
- 14: äußerer Flächenabschnitt
- 15: innerer Flächenabschnitt
- 16: kegelstumpfförmiger Vorsprung
- 17: Zuganker
- 18: Zuganker
- 19: Formscheibe
- 20: kegelstumpfförmige Ausnehmung
- 21: Außenseite
- 22: Nietkopf
- 23: Längsachse
- 24: Längsachse
- 25: äußerer Rand
- 26: äußerer Rand
- 27: Abstand
- 28: größter Abstand
- 29: Biegemoment
- 30: äußerer Rand
- 31: geringer Abstand
- 32: Durchgangsbohrung
- 33: Luftspalt
- 34: zylindrische Bohrung

## Patentansprüche

1. Feste Verbindung der Stirnseiten von zwei hohlen Vierkantprofilen gleicher Querschnittsform, gleicher Abmessungen und gleicher Lage der Biegeachsen wobei
- an jeder zu verbindenden Stirnseite (7,10) ein formsteifes Endstück (8,9) vorgesehen ist, das
- zum jeweils gegenüberliegenden Endstück (9,8) jeweils kongruente Flächenabschnitte (13,14,15), Ausnehmungen (11,12) und Vorsprünge (16) aufweist, **dadurch gekennzeichnet, dass**
- parallel zu einer der beiden Biegeachsen (5,6) und jeweils in einem Abstand (28) dazu die Ausnehmungen (11,12) beider Endstücke (8,9) zwei durchgehende zylindrische Bohrungen (34) bilden, deren
- beide äußeren Enden jeweils von kegelstumpfförmigen, sich über einen Halbkreis erstreckenden Vorsprüngen (16) der Endstücke (8,9) umgeben werden und
- in denen jeweils ein Zuganker (17,18) gelagert ist, dessen äußere Enden (22) sich über
- Formscheiben (19) auf den äußeren Flanken der Vorsprünge (16) abstützen, während
- die zwischen den Bohrungen und den dazu parallelen äußeren Rändern (25,26) gelegenen äußeren Flächenabschnitte (13,14) der Endstücke (8,9) unter der Spannung der Zuganker (17,18) eng aufeinander gepresst werden.

2. Verbindung nach Anspruch 1, **dadurch gekennzeichnet, dass** unabhängig von den jeweiligen Abmessungen der zu verbindenden Vierkantprofile (1,2) der Abstand (27) von wenigstens einer der beiden zylindrischen Bohrungen (34) zum nächstgelegenen dazu parallelen äußeren Rand (25,26) des Endstücks (8,9) zwischen 0,5 und 5mm größer ist, als der äußere Radius der Formscheibe (19).

3. Verbindung nach einem der Ansprüche 1 oder 2, **dadurch gekennzeichnet, dass** der Durchmesser jeder der beiden zylindrischen Bohrungen (34) geringfügig größer ist, als der Durchmesser des jeweiligen Zugankers (17,18).

4. Verbindung nach Anspruch 1, **dadurch gekennzeichnet, dass** die Formscheibe (19) auf der dem Vorsprung (16) zugewandten Innenseite eine kegelstumpfförmige Ausnehmung (20) aufweist.

5. Verbindung nach Anspruch 4, **dadurch gekennzeichnet, dass** die Formscheibe (19) auf ihrer Außenseite (21) plan ist.

6. Verbindung nach einem der Ansprüche 1 bis 5, **dadurch gekennzeichnet, dass** der Zuganker (17,18) ein Schraubenbolzen und eine Mutter ist.

7. Verbindung nach einem der Ansprüche 1 bis 5. **dadurch gekennzeichnet, dass** der Zuganker (17,18) ein Niet (22) ist.

8. Verbindung nach Anspruch 1, **dadurch gekennzeichnet, dass** auf den zwischen den zylindrischen Bohrungen (34) gelegenen Flächenabschnitten (15) der Endstücke (8,9) unter der Vorspannung der Zuganker (17,18) ein geringes Spiel vorliegt.

9. Verbindung nach Anspruch 1, **dadurch gekennzeichnet, dass** senkrecht zu wenigstens einer der beiden zylindrischen Bohrungen (34) eine weitere Bohrung (32) im Endstück (8,9) vorgesehen ist, welche die zylindrische Bohrung (34) schneidet.

10. Verbindung nach Anspruch 9, **dadurch gekennzeichnet, dass** die Achse der weiteren Bohrung (32) mit der zweiten Biegeachse (6) des Vierkantquerschnitts kongruent ist.

11. Verbindung nach Anspruch 1, **dadurch gekennzeichnet, dass** das Endstück (8,9) ein Feingussteil ist, welches mit dem Vierkantprofil (1,2) dauerhaft verbunden ist.

12. Verbindung nach Anspruch 11, **dadurch gekennzeichnet, dass** das Endstück (8,9) und das Vierkantprofil (1,2) miteinander verschweisst sind.

## Claims

1. Fixed connection between the end sides of two hollow quadrilateral profiles of the same cross-sectional shape and the same dimensions and with the same position of the bending axes, it being the case that
- provided on each end side (7, 10) which is to be connected is a dimensionally stable end piece (8, 9) which
- has surface sections (13, 14, 15), recesses (11, 12) and protrusions (16) which are: congruent in each case with the respectively opposite end piece (9, 8), **characterized in that**
- parallel to one of the two bending axes (5, 6), and at a distance (28) therefrom in each case, the recesses (11, 12) of the two end pieces (8, 9) form two continuous cylindrical bores (34), of which
- the two outer ends are each enclosed by frustoconical semicircular protrusions (16) of the end pieces (8, 9) and
- in which is mounted in each case one tie rod (17, 18), of which the outer ends (22)
- are supported on the outer flanks of the protrusions (16) via shaped washers (19), while
- the outer surface sections (13, 14) of the end pieces (8, 9), said surface sections being located between the bores and the outer borders (25, 26) parallel thereto, are pressed closely against one another under the stressing of the tie rods (17, 18).

2. Connection according to Claim 1, **characterized in that**, irrespective of the dimensions of the quadrilateral profiles (1, 2) which are to be connected in each case, the distance (27) between at least one of the two cylindrical bores (34) and the nearest parallel outer border (25, 26) of the end piece (8, 9) is between 0.5 and 5 mm greater than the outer radius of the shaped washer (19).

3. Connection according to either of Claims 1 and 2, **characterized in that** the diameter of each of the two cylindrical bores (34) is slightly larger than the diameter of the respective tie rod (17, 18).

4. Connection according to Claim 1, **characterized in that** the shaped washer (19) has a frustoconical recess (20) on the inside, which is directed towards the protrusion (16).

5. Connection according to Claim 4, **characterized in that** the shaped washer (19) is planar on its outside (21).

6. Connection according to one of Claims 1 to 5, **characterized in that** the tie rod (17, 18) is a bolt and a nut.

7. Connection according to one of Claims 1 to 5, **characterized in that** the tie rod (17, 18) is a rivet (22).

8. Connection according to Claim 1, **characterized in that** a small amount of play is present, under the prestressing of the tie rods (17, 18), on the surface sections (15) of the end pieces (8, 9) which are located.between the cylindrical bores (34).

9. Connection according to Claim 1, **characterized in that** a further bore (32) is provided in the end piece (8, 9) perpendicularly to at least one of the two cylindrical bores (34), this further bore intersecting the cylindrical bore (34).

10. Connection according to Claim 9, **characterized in that** the axis of the further bore (32) is congruent with the second bending axis (6) of the quadrilateral cross section.

11. Connection according to Claim 1, **characterized in that** the end piece (8, 9) is a precision casting which is durably connected to the quadrilateral profile (1, 2).

12. Connection according to Claim 11, **characterized in that** the end piece (8, 9) and the quadrilateral profile (1, 2) are welded to one another.

## Revendications

1. Assemblage fixe des faces frontales de deux profilés creux carrés de même forme de section, de mêmes dimensions et de même position des axes de flexion, un embout (8, 9) rigide étant prévu sur chaque face (7, 10) frontale à assembler, embout qui comporte des régions (13, 14, 15) de surface, des évidements (11, 12) et des saillies (16) respectivement congruents à ceux de l'embout (9, 8) respectivement opposé,
**caractérisé en ce que**
- les évidements (11, 12) des deux embouts (8, 9) forment, parallèlement à un des deux axes (5, 6) de flexion et à une distance (28) respective de cet axe, deux perçages (34) cylindriques traversants,
- dont les deux extrémités extérieures sont respectivement entourées par des saillies (16) tronconiques, s'étendant sur un demi-cercle, des embouts (8, 9),
- et dans chacun desquels est monté un tirant (17, 18), dont les extrémités (22) extérieures
- s'appuient par l'intermédiaire de rondelles (19) façonnées sur les flancs extérieurs des saillies (16),
- tandis que les régions (13, 14) de surface extérieures des embouts (8, 9), situées entre les perçages et les bords (25, 26) extérieurs parallèles à ces perçages, sont étroitement pressées l'une contre l'autre sous la tension des tirants (17, 18).

2. Assemblage suivant la revendication 1, **caractérisé en ce que**, indépendamment des dimensions respectives des profilés (1, 2) carrés à assembler, la distance (27) entre au moins un des deux perçages (34) cylindriques et le bord (25, 26) extérieur le plus proche, parallèle à ce perçage, de l'embout (8, 9) est supérieure d'entre 0,5 et 5 mm au rayon extérieur de la rondelle (19) façonnée.

3. Assemblage suivant la revendication 1 ou 2, **caractérisé en ce que** le diamètre de chacun des deux perçages (34) cylindriques est légèrement supérieur au diamètre du tirant (17, 18) respectif.

4. Assemblage suivant la revendication 1, **caractérisé en ce que** la rondelle (19) façonnée comporte un évidement (20) tronconique sur le côté intérieur, tourné vers la saillie (16).

5. Assemblage suivant la revendication 4, **caractérisé en ce que** la rondelle (19) façonnée est plane sur son côté (21) extérieur.

6. Assemblage suivant l'une des revendications 1 à 5, **caractérisé en ce que** le tirant (17, 18) est un boulon fileté avec un écrou.

7. Assemblage suivant l'une des revendications 1 à 5, **caractérisé en ce que** le tirant (17, 18) est un rivet (22).

8. Assemblage suivant la revendication 1, **caractérisé en ce que**, sous la précontrainte des tirants (17, 18), un faible jeu existe entre les régions (15) de surface des embouts (8, 9) qui sont situées entre les perçages (34) cylindriques.

9. Assemblage suivant la revendication 1, **caractérisé en ce qu'**un perçage (32) supplémentaire est prévu dans l'embout (8, 9) perpendiculairement à au moins un des deux perçages (34) cylindriques, perçage qui coupe le perçage (34) cylindrique.

10. Assemblage suivant la revendication 9, **caractérisé en ce que** l'axe du perçage (32) supplémentaire est congruent au deuxième axe (6) de flexion de la section carrée.

11. Assemblage suivant la revendication 1, **caractérisé en ce que** l'embout (8, 9) est une pièce moulée de précision, qui est durablement assemblée au profilé (1, 2) carré.

12. Assemblage suivant la revendication 11, **caractérisé en ce que** l'embout (8, 9) et le profilé (1, 2) carré sont mutuellement assemblés par soudage.
